(19) Europäisches Patentamt
European Patent Office
Office européen des brevets

(11) **EP 1 756 443 B1**

(12) **EUROPÄISCHE PATENTSCHRIFT**

(45) Veröffentlichungstag und Bekanntmachung des Hinweises auf die Patenterteilung:
**14.11.2007 Patentblatt 2007/46**

(21) Anmeldenummer: **05755579.9**

(22) Anmeldetag: **15.06.2005**

(51) Int Cl.:
*F16D 33/06* *(2006.01)*

(86) Internationale Anmeldenummer:
**PCT/EP2005/006380**

(87) Internationale Veröffentlichungsnummer:
**WO 2005/124176 (29.12.2005 Gazette 2005/52)**

(54) **HYDRODYNAMISCHE KUPPLUNG MIT DREHZAHLSCHUTZ UND TURBOCOMPOUND-SYSTEM**

HYDRODYNAMIC COUPLING WITH A SPEED PROTECTION MECHANISM AND TURBOCOMPOUND SYSTEM

ACCOUPLEMENT HYDRODYNAMIQUE POURVU D'UN DISPOSITIF DE CONTROLE DE VITESSE ET SYSTEME A DOUBLE RECUPERATION D'ENERGIE PAR TURBINE

(84) Benannte Vertragsstaaten:
**DE**

(30) Priorität: **18.06.2004 DE 102004029656**

(43) Veröffentlichungstag der Anmeldung:
**28.02.2007 Patentblatt 2007/09**

(73) Patentinhaber: **Voith Turbo GmbH & Co. KG
89522 Heidenheim (DE)**

(72) Erfinder: **ADLEFF, Kurt
74564 Crailsheim (DE)**

(74) Vertreter: **Schmidt, Sven Hendrik
Dr. Weitzel & Partner
Friedenstraße 10
89522 Heidenheim (DE)**

(56) Entgegenhaltungen:
WO-A-00/55527          DE-A1- 3 345 524
GB-A- 2 292 774          US-A- 2 397 862

**Beschreibung**

Die vorliegende Erfindung betrifft eine hydrodynamische Kupplung, insbesondere für ein Turbocompound-System, und insbesondere ein Turbocompound-System mit einer hydrodynamischen Kupplung.

Die hydrodynamische Kupplung in einem solchen Turbocompound-System dient zur Übertragung von Drehmoment von einer Abgasnutzturbine, die im Abgasstrom eines Verbrennungsmotors angeordnet ist, auf die Kurbelwelle, die vom Verbrennungsmotor angetrieben wird, um dadurch den Wirkungsgrad des Antriebsstrangs zu erhöhen. Naturgemäß erfolgt dadurch, dass die Kurbelwelle über die hydrodynamische Kupplung von der Abgasnutzturbine angetrieben wird, eine Drehmomentabstützung der Nutzturbine, welche ein unkontrolliertes Hochdrehen der Abgasnutzturbine vermeidet. Sollte aus irgendeinem Grunde, beispielsweise durch Füllungsverlust im Kupplungskreislauf, diese Drehmomentabstützung eingeschränkt oder ausgeschaltet werden, so besteht die Gefahr, dass die Abgasnutzturbine in einen Überdrehzahlbereich gelangt und Schaden nimmt.

Zu einem Füllungsverlust im Kupplungskreislauf, das heißt zu einem Verlust von Arbeitsmedium, welches im Arbeitsmediumkreislauf der hydrodynamischen Kupplung umgewälzt wird, kann es zum Beispiel durch einen Schaden an der Kupplungsschale (Riss oder Ähnliches) infolge eines Material- oder Bedienungsfehlers kommen. Selbst wenn Maßnahmen getroffen werden, um die Kupplung bei einem solchen Schadensfall vor einem Totalschaden zu bewahren, würde ein solcher Schaden in einem Turbocompound-System zu der beschriebenen Überdrehzahl der Abgasnutzturbine führen und die letztere schädigen. Um dies auszuschließen, hat man herkömmlich eine Drehzahlüberwachung der Nutzturbine vorgesehen, welche bei Feststellen einer Überdrehzahl geeignete Maßnahmen, wie zum Beispiel das Schalten eines Bypasses um die Abgasnutzturbine, auslöst, da andere Maßnahmen, wie zum Beispiel das Abschalten des die Abgasnutzturbine antreibenden Abgasstromes, was nur durch Ausschalten des Motors möglich ist, nicht praktikabel erscheint

Ein weiterer Nachteil ist darin zu sehen, dass die aktive Drehzahlüberwachung Fremdenergie benötigt.

Das Dokument WO 00/55527 A beschreibt eine hydrodynamische Kupplung mit einer parallel geschalteten Überbrückungskupplung, wobei das Befüllen und Entleeren der hydrodynamischen Kupplung in Abhängigkeit der Ansteuerung der Überbrückungskupplung erfolgt.

Das Dokument GB-A-2 292 774 beschreibt einen aufgeladenen Verbrennungsmotor mit einer Abgasnutzturbine und einer hydrodynamischen Kupplung.

Das Dokument US-A-2 397 862 beschreibt eine hydrodynamische Kupplung mit Verrieglungsbolzen, welche oberhalb einer vorgegebenen Geschwindigkeit des Pumpenrades das Pumpenrad und das Turbinenrad drehfest miteinander verbinden.

Der Erfindung liegt die Aufgabe zugrunde, eine hydrodynamische Kupplung und insbesondere ein Turbocompound-System mit einer erfindungsgemäßen hydrodynamischen Kupplung darzustellen, welche/welches gegenüber dem Stand der Technik verbessert ist und insbesondere einen automatischen, ohne Fremdenergie auskommenden Überdrehzahlschutz bietet

Diese Aufgabe wird durch eine hydrodynamische Kupplung mit den Merkmalen von Anspruch 1 und durch ein Turbocompound-System mit den Merkmalen von Anspruch 10 gelöst. Die Unteransprüche beschreiben besonders vorteilhafte Ausgestaltungen der Erfindung.

So weist die hydrodynamische Kupplung gemäß Anspruch 1 zunächst die üblichen Bauteile auf, wie ein Pumpenrad und ein Turbinenrad, welche miteinander einen Arbeitsraum ausbilden. Dieser Arbeitsraum ist mit einem Arbeitsmedium befüllt oder befüllbar. Zum Zuführen und Abführen von Arbeitsmedium in den Arbeitsraum und aus dem Arbeitsraum ist ein Arbeitsmediumkreislauf vorgesehen, welcher auch Kupplungskreislauf genannt wird.

Erfindungsgemäß weist die hydrodynamische Kupplung eine Verriegelungseinrichtung auf, welche geeignet ist, das Pumpenrad und das Turbinenrad drehfest aneinander zu verriegeln. Diese Verriegelungseinrichtung steht mit einem arbeitsmediumführenden Bereich der Kupplung, beispielsweise zwischen dem Pumpenrad und dem Turbinenrad, insbesondere zwischen einer Außenschale des Pumpenrades, welche das Turbinenrad auf seiner Rückseite umschließt, in Verbindung, und zwar derart, dass sie unterhalb eines vorbestimmten Füllungsgrades des Arbeitsraumes, wobei sich der Füllungsgrad in einer (teilweisen) Befüllung und Entleerung des arbeitsmediumführenden Bereichs auswirkt, schließt. Schließen im Sinne der vorliegenden Erfindung bedeutet dabei ein drehfestes Verriegeln von Pumpenrad und Turbinenrad aneinander. Das Schließen erfolgt dabei vorteilhaft selbsttätig, das heißt ohne ein von außerhalb der Kupplung bewirktes manuelles Betätigen, insbesondere selbsttätig unter dem während des Betriebes der hydrodynamischen Kupplung notwendigerweise auftretenden Fliehkrafteinfluss. Vorteilhaft ist die mechanische Verriegelungseinrichtung in Form einer Überbrückungskupplung ausgeführt, welche selbsttätig, insbesondere unter dem während des Betriebes notwendigerweise auftretenden Fliehkrafteinfluss, ein- und ausrückt.

Besonders vorteilhaft kann die mechanische Verriegelungseinrichtung derart ausgebildet sein, dass sie neben ihrer Überwachungsfunktion für den Füllungsgrad des Arbeitsraumes gleichzeitig einen Überdrehzahlschutz für die hydrodynamische Kupplung darstellt. In diesem Fall ist sie, beispielsweise durch Vorsehen eines Fliehkraftelementes, d. h. eines Elementes mit einer vorbestimmten Masse, das sich oberhalb einer vorgegebenen Drehzahl durch die Zentrifugalkraft radial nach außen verschiebt, derart ausgebildet, dass sie oberhalb einer vorgegebenen Drehzahl des Pumpenrades oder des Turbinenrades schließt. Auch hier erfolgt das Schließen der Verriegelungseinrichtung, welcher vorteilhaft als Überbrückungskupplung ausgebildet ist, insbesondere selbsttätig, das heißt die Überbrückungskupplung rückt beispielsweise unter dem während des Betriebes notwendigerweise auftretenden Fliehkrafteinfluss selbsttätig ein und aus.

Insbesondere bei der Verwendung der erfindungsgemäßen hydrodynamischen Kupplung in einem Turbocompound-System führt das Schließen der Verriegelungseinrichtung, das heißt die mechanische Kopplung der Abgasnutzturbinendrehzahl an die Kurbelwellendrehzahl, dazu, dass die Komponenten der Abgasnutzturbine sicher vor Zerstörung durch Überdrehzahl geschützt werden. Somit tritt in dem Fall, dass die hydrodynamische Kopplung zwischen Abgasnutzturbinendrehzahl und Kurbelwellendrehzahl ausfällt, an deren Stelle eine mechanische Verbindung. Beispielsweise kann dies eine Verbindung des Kupplungsaußenteils, das heißt der Schale des Pumpenrades, mit dem Innenrad, das heißt dem Turbinenrad, sein.

Die Kupplungsschale, welche durch die Verbindung mit dem Pumpenrad mit Pumpenraddrehzahl umläuft, kann beispielsweise über ein Getriebe, in der Regel einen Rädertrieb, mit der Nutzturbine verbunden sein, während das Innenrad, das heißt das Turbinenrad, über ein Getriebe, in der Regel ein Rädertrieb, mit der Kurbelwelle verbunden ist. Insbesondere zwischen der Kupplungsschale und dem Innenrad kann ein in radialer Richtung der Kupplung verschiebbarer Bolzen angeordnet sein, und ferner eine Öffnung, mit welcher der Bolzen fluchtet. Der Bolzen greift in einer ersten, verriegelnden Position, wenn die mechanische Verriegelungseinrichtung schließt, in die Öffnung ein oder durch diese hindurch. In einer zweiten Position, das heißt der geöffneten Position der Verriegelungseinrichtung, befindet sich der Bolzen vollständig außerhalb der Öffnung. Ob der Bolzen in die Öffnung eingreift oder nicht, wird durch den Füllungsgrad im Arbeitsraum dadurch bestimmt, dass in dem Fall, dass die Verriegelungseinrichtung geöffnet ist, das Arbeitsmedium eine Verdrängungskraft auf den Bolzen ausübt, so dass der Bolzen aus der Öffnung heraus verdrängt wird. In dem Fall, dass die Verriegelungseinrichtung geschlossen ist, ist dieses verdrängende Arbeitsmedium in dem entsprechenden arbeitsmediumführenden Bereich nicht vorhanden, und der Bolzen wird durch ein geeignetes Druckmittel, beispielsweise eine Druckfeder, in die Öffnung hinein beziehungsweise durch diese hindurchgedrückt.

Insbesondere wirken auf den Bolzen im Betrieb die folgenden Kräfte:

* die Fliehkraft (Zentrifugalkraft) $F_Z = m\omega^2 r$
mit:

m: Masse (kg)

w: Winkelgeschwindigkeit (1/s)
r: Kreisbahnradius (m);

* die Federkraft (Rückstellkraft) $F_R = -kx$
mit:

k: Federkonstante (N/m)
x: Auslenkung (m);

* die Kraft durch den Rotationsdruck an der radial außen liegenden Stirnfläche des Bolzens $F_P = A_{Bolzen}\,\rho/2\,\omega^2\,(r_{wirk}^2 - r_{FR}^2)$ (N)
mit:

$A_{Bolzen}$: radial außen liegende Stirnfläche des Bolzens (m$^2$)
p: Dichte des Arbeitsmediums (kg/m$^3$)
w: Winkelgeschwindigkeit (1/s)
$r_{wirk}$ : Radius, auf dem die äußere Stirnfläche des Bolzens liegt (m)
$r_{FR}$: Innendurchmesser des Flüssigkeitsrings im Arbeitsraum (m)

* die Auftriebskraft (im rotierenden Raum) $F_{A,rot} = \rho\,a_{rot}V$
mit:

p: Dichte des Arbeitsmediums (kg/m$^3$)
$a_{rot} = \omega^2 r$ Zentripetalbeschleunigung (m/s$^2$)
V: Volumen des vom Bolzen verdrängten Arbeitsmediums (m$^3$).

Im Normalbetrieb, das heißt außerhalb eines für die Abgasnutzturbine oder die hydrodynamische Kupplung kritischen Betriebs, gilt:

$$F_Z < F_R + F_p + F_{A,rot}$$

Der Bolzen verbleibt damit bei jeder Drehzahl des Normalbetriebs sicher in seiner vorgesehenen Position außerhalb des Eingriffs mit der Öffnung.

Sinkt der Füllstand in der Kupplung, reduziert sich damit der Rotationsdruck $F_{pu}$ und/oder die Auftriebskraft. Damit ändern sich die Kräfteverhältnisse am Bolzen:

$$F_Z > F_R + F_p + F_{A,rot}$$

Somit überwiegt die Fliehkraft $F_Z$ die ihr entgegengesetzten Kräfte, was dazu führt, dass der Bolzen in die Öffnung hineingleitet und Pumpenrad und Turbinenrad drehfest aneinander verriegelt. Dieselbe Bewegung des Bolzens tritt ebenfalls dann ein, wenn zwar die Auftriebskraft noch vorhanden ist, aufgrund von Überdrehzahlen jedoch die Fliehkraft $F_z$ soweit ansteigt, dass sie die ihr entgegengesetzten Kräfte trotz der vergleichsweise großen Auftriebskraft überwindet.

Bei der Verwendung der hydrodynamischen Kupplung in einem Turbocompound-System wird somit eine mechanische Kopplung zwischen der Kurbelwelle und der Abgasnutzturbine hergestellt.

In den obigen Gleichungen wurde der Einfachheit halber mit einer wirkenden Druckfederkraft gerechnet. Selbstverständlich ist es möglich, jedes beliebige Druckmittel, welches eine Kraft auf den Bolzen entgegen der Fliehkraft ausüben kann, zu verwenden. Bei Verwendung einer solchen Druckfeder ist es vorteilhaft, die Feder derart auszulegen, dass der Bolzen bei niederen Drehzahlen der Turbine (zum Beispiel beim Start) in der radial innenliegenden Position gehalten wird, wohingegen bei einer Überdrehzahl er auch bei gefülltem Kreislauf radial nach außen gleitet, um die Turbine vor einem längeren Betrieb mit dieser Überdrehzahl zu schützen.

Gemäß einer Ausführungsform rastet der Bolzen nach dem Eintritt in die Öffnung ein, um somit eine Notsynchronisation zwischen Kurbelwelle und Abgasnutzturbine herzustellen, welche solange aufrechterhalten wird, bis der Bolzen wieder manuell ausgerastet wird. Gemäß einer anderen Ausführung wird der Bolzen automatisch nach Stillsetzen des Motors wieder in seine Ursprungsposition, das heißt in seine radial innen liegende Position, zurückgeführt.

Gemäß einer weiteren Ausführungsform der Erfindung ist zwischen der Kupplungsschale und dem Innenrad kein "schwimmender" Bolzen, sondern ein "schwimmender" Kipphebel vorgesehen. Dieser Kipphebel kann entsprechend des zuvor beschriebenen Funktionsprinzips des Bolzens arbeiten, das heißt eine erste Position einnehmen, bei welcher sich das Turbinenrad relativ zu dem Pumpenrad bzw. das Innenrad relativ gegenüber der Kupplungsschale drehen kann, und eine zweite Position, in welcher der Kipphebel Pumpenrad und Turbinenrad bzw. das Innenrad und die Kupplungsschale drehfest miteinander verriegelt.

Die Kipphebel und sein Gegenstück, beispielsweise in Form einer Öffnung, in welche der Kipphebel eingreift, kann wie der zuvor beschriebene Bolzen im Bereich zwischen der Kupplungsschale und der Rückseite des Turbinenrads vorgesehen sein. Selbstverständlich kann ein solcher Kipphebel auch zwischen zwei sich stirnseitig gegenüberstehenden Kupplungsrädern, allgemein dem Primärrad (Pumpenrad) und dem Sekundärrad (Turbinenrad) angeordnet sein und für eine Verriegelung in vorbestimmten Zuständen der beiden ausgebildet sein. Die Position des Kipphebels wird dabei vorteilhaft entsprechend der Ausführung des Bolzens durch den Füllstand der Kupplung, die Fliehkraft auf den Kipphebel, einer Federkraft auf den Kipphebel und den Rotationsdruck auf den Kipphebel eingestellt.

Die Erfindung wird nachfolgend anhand von Ausführungsbeispielen erläutert.

Es zeigen:

Figur 1    eine hydrodynamische Kupplung in einem Turbocompound-System;

Figur 2    Details der erfindungsgemäß ausgeführten hydrodynamischen Kupplung gemäß Figur 1 in einem geöffneten Zustand (Figur 2a) und einem geschlossenen (verriegelten) Zustand (Figur 2b);

Figur 3    eine weitere erfindungsgemäß ausgeführte hydrodynamische Kupplung in einem geöffneten Zustand (Figur 3a) und einem geschlossenen (verriegelten) Zustand (Figur 3b).

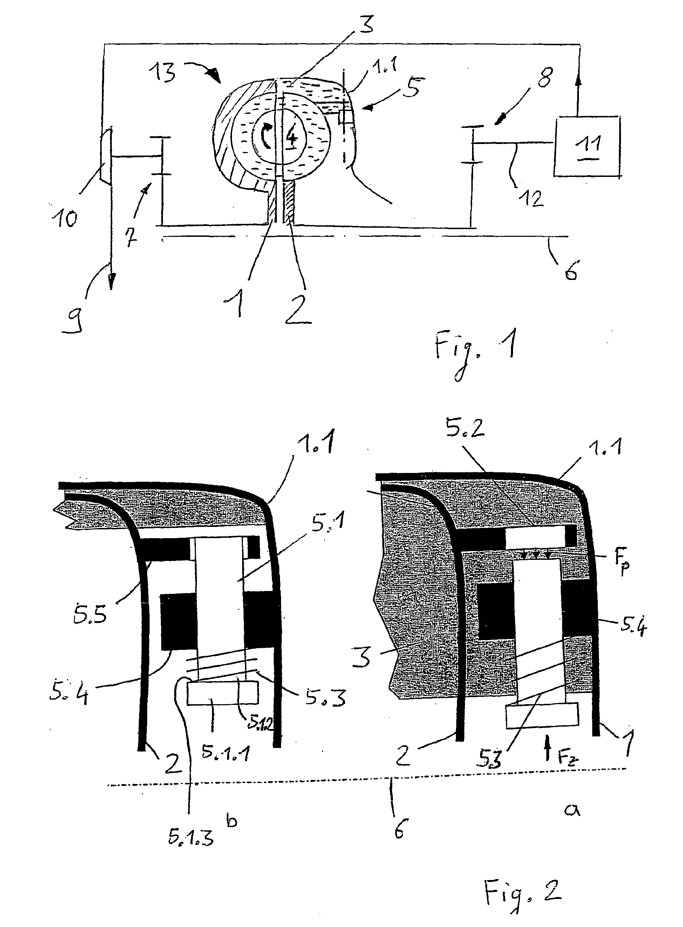

In der Figur 1 erkennt man die hydrodynamische Kupplung 13, welche in einer Triebverbindung zwischen der durch den Verbrennungsmotor 11 angetriebenen Kurbelwelle und der mit Abgas des Verbrennungsmotors 11 beaufschlagten Abgasnutzturbine 10 angeordnet ist. Die hydrodynamische Kupplung 13 weist ein Pumpenrad 1 auf sowie ein Turbinenrad 2. Das Pumpenrad 1 steht über das Getriebe 7 in Triebverbindung mit der Abgasnutzturbine 10. Das Turbinenrad 2 steht über das Getriebe 8 in Triebverbindung mit der Kurbelwelle 12.

9 bezeichnet die Führung des Abgasstromes.

Das Pumpenrad 1 und das Turbinenrad 2 bilden miteinander einen Arbeitsraum 4 aus, in welchem das Arbeitsmedium 3 zirkuliert, siehe die durch den Pfeil im Arbeitsraum 4 angedeutete Zirkulationsrichtung. Das Arbeitsmedium 3 wird im Pumpenrad 1 radial nach außen beschleunigt und im Turbinenrad 2 radial nach innen verzögert. Über die Kreislaufströmung des Arbeitsmediums 3 wird vom Pumpenrad 1 auf das Turbinenrad 2 Drehmoment übertragen.

Das Arbeitsmedium 3 wird beispielsweise im Zentrum oder etwa im Zentrum des Arbeitsmediumkreislaufes zugeführt (nicht dargestellt) und aus dem Arbeitsraum 4 radial nach außen in einen Bereich zwischen der Rückseite des Turbinenrades 2, das heißt der Seite, die dem Arbeitsraum 4 entgegengesetzt ist, und einer Außenschale 1.1, die drehfest mit dem Pumpenrad 1 verbunden ist und das Turbinenrad 2 umschließt, abgeführt. Diese Abführung stellt sich immer bei einer teilweisen oder vollständigen Entleerung des Arbeitsraums 4 ein. Jedoch wird auch in dem Fall, dass sich eine konstante Menge an Arbeitsmedium 3 in dem Arbeitsraum 4 befindet, sich ein entsprechender Arbeitsmediumpegel im Bereich zwischen dem Turbinenrad 2 und der Außenschale 1.1 einstellen.

In der Figur 2 erkennt man nochmals eine schematische Detailansicht des Bereiches aus der Figur 1, in welchem die erfindungsgemäße Verriegelungseinrichtung 5 angeordnet ist. Sowohl in der Figur 1 als auch in der Figur 2 ist mittels einer Strichpunktlinie die Drehachse 6 der hydrodynamischen Kupplung angedeutet.

In der Figur 2 erkennt man wiederum deutlich den Pegel des Arbeitsmediums 3 im Bereich der mechanischen Verriegelungseinrichtung 5, und zwar in der Figur 2a im "Normalbetrieb", während in der Figur 2b ein Betriebszustand dargestellt ist, in welchem aus irgendeinem Grund Arbeitsmedium ungewollt aus der hydrodynamischen Kupplung ausgetreten ist.

In der Figur 2a befindet sich der Bolzen aufgrund der Kraft der Feder 5.3, des an der radial außen liegenden Stirnfläche des Bolzens 5.1 anliegenden Rotationsdruckes (Kraft $F_B$) und der Auftriebskraft des Arbeitsmedium 3, in welches der Bolzen fast vollständig mit seinem Schaft 5.1.2 eingetaucht ist, wobei diesen Kräften nur die Rotationskraft $F_z$ entgegengerichtet ist, in seiner radial inneren Position und somit außerhalb der Öffnung 5.2. Somit wird eine Relativdrehzahl (Kupplungsschlupf) zwischen dem Pumpenrad 1 und dem Turbinenrad 2 ermöglicht.

Gemäß der Figur 2b hingegen entfällt aufgrund des Arbeitsmediumpegels, welcher sich gegenüber des Betriebszustandes, welcher in der Figur 2a gezeigt ist, radial nach außen verschoben hat, sowohl die Auftriebskraft als auch der Rotationsdruck an der radial außen liegenden Stirnfläche des Bolzens 5.1. Die Fliehkraft $F_z$ überwindet die Federkraft der Feder 5.3 und schiebt den Bolzen 5.1 mit dem radial äußeren Ende in die Öffnung 5.2. Es wird eine mechanische Verriegelung zwischen der Außenschale 1.1 und dem Turbinenrad 2 und damit zwischen dem Pumpenrad 1 und dem Turbinenrad 2 hergestellt. Dadurch wird die Abgasnutzturbine 10, das heißt das Laufrad derselben, hinsichtlich ihrer Drehzahl mechanisch an die Kurbelwelle 12 gekoppelt, wobei sich die Absolutdrehzahl der Abgasnutzturbine 10 entsprechend der Übersetzungen der zwischengeschalteten Getriebe 7 und 8 einstellt.

Wie man in der Figur 2 erkennen kann, ist gemäß der gezeigten Ausführung die Öffnung 5.2 in einem Vorsprung 5.5, der an der Rückseite des Turbinenrades 2 ausgebildet ist, eingebracht. Der Bolzen 5.1 gleitet mit seinem zylindrischen Schaft 5.1.2 innerhalb einer Führung 5.4, welche den Schaft 5.1.2 in Umfangsrichtung umschließt. Radial innen ist an den Schaft 5.1.2 ein verdickter, das heißt mit einem größeren Durchmesser versehener Kopfbereich 5.1.1 angeschlossen. Aufgrund des Überstandes des Kopfbereiches 5.1.1 gegenüber dem Schaft 5.1.2 wird radial außen am Kopfbereich 5.1.1 eine Schulter 5.1.3 ausgebildet, an welcher die Feder 5.3 mit ihrem radial inneren axialen Ende angreift. Mit ihrem entgegengesetzten, radial äußeren axialen Ende greift die Feder 5.3 an der Führung 5.4 an. Da die Feder 5.3 als Druckfeder ausgebildet ist, übt sie somit eine Kraft in radialer Richtung nach innen auf den Bolzen 5.1 aus.

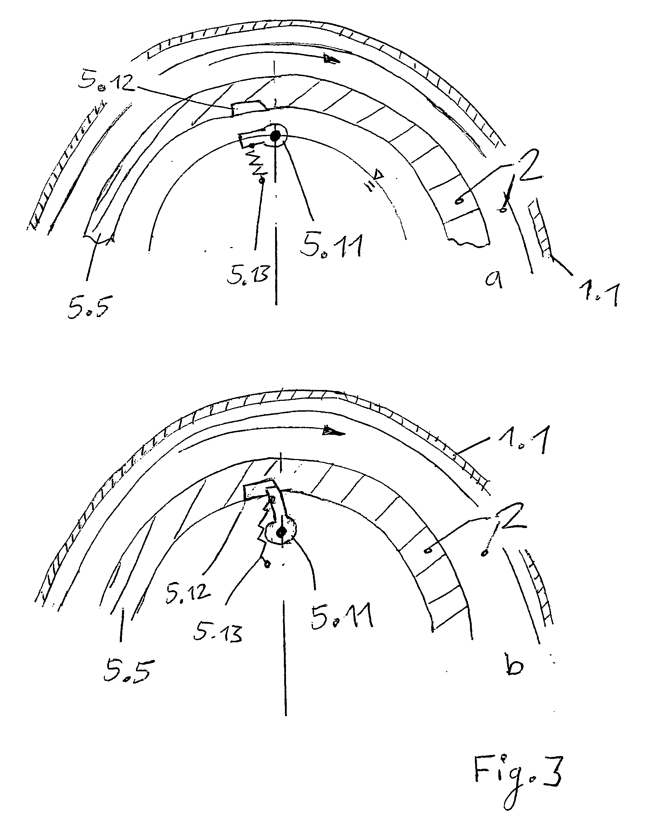

Die Figur 3 zeigt einen gegenüber den Figuren 1 und 2 abgewandelten Verriegelungsmechanismus in einem geöffneten Zustand (Figur 3a) und einem verriegelten Zustand (Figur 3b). Dabei stellt die Figur 3 zwei Schnittdarstellungen in einem Radialschnitt in etwa durch die Position der Längsachse des Bolzens in den Figuren 1 und 2 dar, obgleich in der Ausführung gemäß der Figur 3 natürlich kein Bolzen vorgesehen ist.

In diesem Schnitt erkennt man als Bauteil des Pumpenrads 1 nur den innen an der Außenschale 1.1 angeschlossenen Kipphebel 5.11 sowie ansatzweise eine Radialschnittfläche durch die Außenschale 1.1 in einem radial äußeren Bereich.

Von dem Turbinenrad 2 ist nur ein Schnitt durch den axialen Vorsprung 5.5 dargestellt, in welchem die Öffnung 5.12 als Gegenstück zu dem Kipphebel ausgebildet ist, sowie die Außenkontur des Turbinenrads 2.

Wie man sieht, ist anstelle des Bolzens ein am Pumpenrad 1 gelenkig angeschlossener Kipphebel 5.11 vorgesehen, welcher radial nach außen um eine Achse parallel zur Drehachse der Kupplung verschwenkbar ist. Der Kipphebel 5.11 wird dabei in der in der Figur 3a gezeigten entriegelten Position entgegen der Kraft der Druckfeder 5.13 und der Fliehkraft durch die Auftriebskraft des Arbeitsmediums, siehe den eingezeichneten Flüssigkeitsspiegel, gehalten.

Bei einem Absinken des Füllungsgrads, wodurch der gezeigte Flüssigkeitspegel radial nach außen wandert und die Auftriebskraft auf den Kipphebel 5.11 abnimmt, bewegt sich der Kipphebel 5.11 aufgrund der Kraft der Druckfeder 5.13 in die in der Figur 3b gezeigte zweite Position.

Bei einer entsprechend großen Fliehkraft durch eine hohe Drehzahl des Pumpenrads 1, beispielsweise dadurch, dass vom Turbinenrad 2 kein Bremsmoment übertragen wird, insbesondere weil die Kupplung weitgehend oder vollständig von Arbeitsmedium entleert ist, kippt auch die Zentrifugalkraft den Kipphebel 5.11 in eine Richtung radial nach außen in Richtung einer Aussparung oder Öffnung in dem Turbinenrad 2 beziehungsweise in einem an diesem vorgesehenen Vorsprung. Der Kipphebel 5.11 hakt in diese Öffnung 5.12 ein, so dass das Pumpenrad 1, welches sich mit der durch den Pfeil angedeuteten Drehrichtung dreht, das Turbinenrad 2 mitreißt.

Selbstverständlich ist es auch denkbar, dass ausschließlich der Flüssigkeitspegel und damit der Füllungsgrad der Kupplung die Position des Kipphebels 5.11 bestimmt, wenn der Kipphebel derart leicht ausgeführt ist, dass der Einfluss der Fliehkraft vernachlässigt werden kann.

Nachfolgend wird ein mögliches Ausführungsbeispiel der Erfindung, vorteilhaft entsprechend der in der Figur 2 dargestellten Form, rechnerisch analysiert.

Beispielsweise kann ein Aluminiumgewicht (insbesondere in Form des beschriebenen Bolzens 5.1) einen Durchmesser von 10 mm und eine Länge von 200 mm aufweisen. Sämtliche Maßangaben dieser Beschreibung sind dabei als vorzuziehende Werte anzusehen, welche vorteilhaft in etwa eingehalten werden. Das Aluminiumgewicht ist zum Beispiel zu 75 % in das Arbeitsmedium eingetaucht, wenn sich die hydrodynamische Kupplung im Nennzustand befindet, das heißt ein vorbestimmter Füllungsgrad nicht unterschritten ist. Mit einer geeigneten Feder lässt sich das System derart abstimmen, dass bei einer Drehzahl von zum Beispiel 8586 pro Minute der Kolben ausfährt, das heißt die mechanische Verriegelungseinrichtung schließt. Hierdurch wird eine Überdrehzahl von mehr als 8586 pro Minute verhindert. Nimmt hingegen der Füllungsgrad des Arbeitsraums in der Kupplung ab, wirkt ein verminderter Auftrieb und somit insbesondere nur noch die Federkraft, welche an dem Bolzen anliegt, der Fliehkraft, welche auf den Bolzen wirkt, entgegen. Das Schließen der mechanischen Verriegelungseinrichtung erfolgt demnach früher, beispielsweise innerhalb des normalen Betriebsbereiches der hydrodynamischen Kupplung, das heißt innerhalb eines Drehzahlbereiches, welcher bei gefüllter Kupplung bzw. einem vorgegebenen Füllungsgrad des Arbeitsraums der Kupplung zulässig ist.

Bei einer Dichte des verwendeten Aluminiums für die Verriegelungseinrichtung bzw. den Bolzen von $0,00265$ g pro $mm^3$ und einer Dichte des Arbeitsmediums von $0,0084$ g pro $mm^3$ ergibt sich bei einer Winkelgeschwindigkeit von 900 pro Sekunde eine Auftriebskraft auf den Bolzen von 56,1 Newton. Die Rückstellkraft durch den Rotationsdruck im Arbeitsmedium auf den Bolzen beträgt 74,8 Newton. Die Fliehkraft beträgt bei dieser Ausführung 236 Newton und die Federkraft beträgt insbesondere 105,1 Newton. Hieraus ergibt sich ein Schließen der Verriegelungseinrichtung oberhalb von 8586 Umdrehungen pro Minute, was der genannten Winkelgeschwindigkeit von 900 pro Sekunde entspricht.

Bei einem Ölverlust hingegen ist sowohl die Auftriebskraft als auch die Rückstellkraft durch den Rotationsdruck gleich Null. Hieraus ergibt sich eine Schaltdrehzahl von 4730 pro Minute. Ein Durchgehen der Turbine wird somit sicher verhindert.

Bezugszeichenliste

| | |
|---|---|
| 1. | Pumpenrad |
| 1.1 | Außenschale |
| 2 | Turbinenrad |
| 3 | Arbeitsmedium |
| 4 | Arbeitsraum |
| 5 | mechanische Verriegelungseinrichtung |
| 5.1 | Bolzen |
| 5.1.1 | Kopfbereich |
| 5.1.2 | Schaft |
| 5.1.3 | Schulter |
| 5.2 | Öffnung |
| 5.3 | Druckfeder |
| 5.4 | Führung |
| 5.5 | Vorsprung |
| 5.11 | Kipphebel |
| 5.12 | Öffnung |
| 5.13 | Druckfeder |
| 6 | Kupplungsdrehachse |
| 7 | Getriebe |
| 8 | Getriebe |
| 9 | Abgasführung |
| 10 | Abgasnutzturbine |
| 11 | Verbrennungsmotor |
| 12 | Kurbelwelle |
| 13 | hydrodynamische Kupplung |

**Patentansprüche**

1. Hydrodynamische Kupplung (13), insbesondere für ein Turbocompound-System, umfassend:

   1.1 ein Pumpenrad (1);
   1.2 ein Turbinenrad (2), welches mit dem Pumpenrad (1) einen mit einem Arbeitsmedium (3) befüllbaren Arbeitsraum (4) ausbildet; wobei,
   1.3 eine mechanische Verriegelungseinrichtung (5) zum drehfesten Verbinden von Pumpenrad (1) und Turbinenrad (2) vorgesehen ist, **dadurch gekennzeichnet, dass** die mechanische Verriegelungseinrichtung derart mit einem arbeitsmediumführenden Bereich der Kupplung (13) in Verbindung steht, dass sie unterhalb eines vorbestimmten Füllungsgrads des Arbeitsraums (4) schließt.

2. Hydrodynamische Kupplung (13) gemäß Anspruch 1, **dadurch gekennzeichnet, dass** die mechanische Verriegelungseinrichtung (5) derart ausgebildet ist, dass sie ferner oberhalb einer vorgegebenen Drehzahl des Pumpenrades (1) oder des Turbinenrades (2) schließt.

3. Hydrodynamische Kupplung (13) gemäß einem der Ansprüche 1 oder 2, **gekennzeichnet durch** die folgenden Merkmale:

   3.1 die mechanische Verriegelungseinrichtung (5) weist einen in radialer Richtung der Kupplung verschiebbaren Bolzen (5.1) und eine Öffnung (5.2), die eingreifbar **durch** den Bolzen (5.1) ist, auf;
   3.2 der Bolzen (5.1) ist drehfest an einem der beiden Räder (1, 2), insbesondere dem Pumpenrad (1) angeschlossen, und die Öffnung (5.2) ist in dem anderen Rad (1, 2), insbesondere dem Turbinenrad (2) angeordnet;
   3.3 der Bolzen (5.1) ist bei und oberhalb des vorbestimmten Füllungsgrads in das Arbeitsmedium (3) derart eingetaucht, dass er zumindest unter Mitwirkung der Auftriebskraft ($F_A$) des Arbeitsmediums (3) aus der Öffnung (5.2) heraus gedrückt wird;
   3.4 es ist ein Druckmittel, insbesondere eine Druckfeder (5.3) vorgesehen, welche der Auftriebskraft ($F_A$) des Arbeitsmediums (3) auf den Bolzen (5.1) entgegenwirkt, so dass unterhalb des vorbestimmten Füllungsgrads der Bolzen (5.1) in die Öffnung (5.2) eingreift.

4. Hydrodynamische Kupplung (13) gemäß Anspruch 3, **dadurch gekennzeichnet, dass** der Bolzen (5.1) eine zylindrische Form aufweist, und seine Längsachse senkrecht zur Drehachse (6) der Kupplung (13) steht.

5. Hydrodynamische Kupplung (13) gemäß einem der Ansprüche 3 oder 4, **dadurch gekennzeichnet, dass** das Pumpenrad (1) eine Außenschale (1.1) aufweist, die das Turbinenrad (2) auf seiner dem Arbeitsraum (4) abgewandten Seite umschließt, und **dadurch**, dass die mechanische Verriegelungseinrichtung (5) im Raum zwischen der Außenschale (1.1) und dem Turbinenrad (2) angeordnet ist.

6. Hydrodynamische Kupplung (13) gemäß Anspruch 5, **dadurch gekennzeichnet, dass** der Bolzen (5.1) in einer Führung (5.4), die an der Außenschale (1.1) befestigt oder integral mit dieser ausgebildet ist, gleitet, und **dadurch**, dass die Öffnung (5.2) in einen Vorsprung (5.5) an dem Turbinenrad (2), insbesondere fluchtend mit der Führung (5.4), ausgebildet ist.

7. Hydrodynamische Kupplung (13) gemäß Anspruch 6, **dadurch gekennzeichnet, dass** der Bolzen (5.1) an seinem radial inneren Ende mit einem Kopfbereich (5.1.1) versehen ist, der gegenüber einem sich radial nach außen anschließenden Schaft (5.1.2) des Bolzens (5.1) einen vergrößerten Außendurchmesser aufweist, so dass eine Schulter (5.1.3) ausgebildet wird, und dass eine Druckfeder (5.3), welche als das Druckmittel vorgesehen ist, sich gegen diese Schulter (5.1.3) und radial entgegengesetzt gegen die Führung (5.4) abstützt.

8. Hydrodynamische Kupplung (13) gemäß einem der Ansprüche 3 und 7, **dadurch gekennzeichnet, dass** die Druckfeder (5.3) eine derartige Federkraft ($F_R$) aufweist, und der Bolzen (5.1) eine solche Masse (m) aufweist, dass die mechanische Verriegelungseinrichtung (5) oberhalb der vorgegebenen Drehzahl unabhängig des Füllungsgrads des Arbeitsraums (4) schließt.

9. Hydrodynamische Kupplung gemäß einem der Ansprüche 1 oder 2, **gekennzeichnet durch** die folgenden Merkmale:

    9.1 die mechanische Verriegelungseinrichtung (5) weist einen in radialer Richtung der Kupplung verschwenkbaren Kipphebel (5.11) und eine Öffnung (5.12), die eingreifbar **durch** den Kipphebel (5.11) ist, auf;
    9.2 der Kipphebel (5.11) ist ortsfest an einem der beiden Räder (1,2), insbesondere dem Pumpenrad (1) angeschlossen, und die Öffnung (5.12) ist in dem anderen Rad (1,2), insbesondere dem Turbinenrad (2), angeordnet;
    9.3 der Kipphebel (5.11) ist bei und oberhalb des vorbestimmten Füllungsgrads in das Arbeitsmedium (3) derart eingetaucht, dass er zumindest unter Mitwirkung der Auftriebskraft ($F_A$) des Arbeitsmediums (3) aus der Öffnung (5.12) herausgedrückt wird;
    9.4 es ist ein Druckmittel, insbesondere eine Druckfeder (5.13) vorgesehen, welche der Auftriebskraft ($F_A$) des Arbeitsmediums (3) auf den Kipphebel (5.11) entgegenwirkt, so dass unterhalb des vorbestimmten Füllungsgrads der Kipphebel (5.11) in die Öffnung (5.12) eingreift.

10. Hydrodynamische Kupplung (13) gemäß einem der Ansprüche 1 bis 9, **dadurch gekennzeichnet, dass** die mechanische Verriegelungseinrichtung (5) mit einem Mittel versehen ist, welches die Verriegelungseinrichtung (5) nach dem Schließen bis zu einer manuellen Betätigung geschlossen hält.

    11. Turbocompound-System mit einer Abgasnutzturbine (10), die im Abgasstrom (9) eines Verbrennungsmotors (11) angeordnet ist, wobei
    11.1 der Verbrennungsmotor (11) eine Kurbelwelle (12) antreibt, und
    11.2 die Abgasnutzturbine (10) in eine Triebverbindung mit der Kurbelwelle (12) schaltbar ist oder geschaltet ist;
    **dadurch gekennzeichnet, dass**
    11.3 in der Triebverbindung eine hydrodynamische Kupplung (13) gemäß einem der Ansprüche 1 bis 9 angeordnet ist, deren Pumpenrad (1) in einer Triebverbindung mit der Abgasnutzturbine (10) und deren Turbinenrad (2) in einer Triebverbindung mit der Kurbelwelle (12) steht.

## Claims

1. A hydrodynamic coupling (13), especially for a turbocompound system, comprising:

    1.1 a pump wheel (1);
    1.2 a turbine wheel (2) which forms with the pump wheel (1) a working chamber (4) which can be filled with a working medium (3);
    1.3 with a mechanical locking device (5) being provided for torsionally rigid connection of pump wheel (1) and turbine wheel (2),

    **characterized in that** the mechanical locking device is in connection with a working-medium-guiding region of the coupling (13) in such a way that it closes beneath a predetermined degree of filling of the working chamber (4).

**2.** A hydrodynamic coupling (13) according to claim 1, **characterized in that** the mechanical locking device (5) is arranged in such a way that it further closes above a predetermined speed of the pump wheel (1) or the turbine wheel (2).

**3.** A hydrodynamic coupling (13) according to one of the claims 1 or 2, **characterized by** the following features:

> 3.1 the mechanical locking device (5) comprises a bolt (5.1) which is displaceable in the radial direction of the coupling and an opening (5.2) which can be engaged by the bolt (5.1);
> 3.2 the bolt (5.1) is connected in a torsionally rigid manner to one of the two wheels (1, 2), especially the pump wheel (1), and the opening (5.2) is arranged in the other wheel (1, 2), especially the turbine wheel (2);
> 3.3 the bolt (5.1) immerses into the working medium (3) at and above a predetermined degree of filling in such a way that it is pressed out of the opening (5.2) at least under cooperation of the lifting power ($F_A$) of the working medium;
> 3.4 a pressure means, especially a pressure spring (5.3), is provided which counteracts the lifting power ($F_A$) of the working medium on the bolt (5.1), so that the bolt (5.1) engages in the opening (5.2) beneath the predetermined degree of filling.

**4.** A hydrodynamic coupling (13) according to claim 3, **characterized in that** the bolt (5.1) has a cylindrical shape and its longitudinal axis stands perpendicular to the rotational axis (6) of the coupling (13).

**5.** A hydrodynamic coupling (13) according to one of the claims 3 or 4, **characterized in that** the pump wheel (1) comprises an outside shell (1.1) which encloses the turbine wheel (2) on its side averted from the working chamber (4) and that the mechanical locking device (5) is arranged in the space between the outside shell (1.1) and the turbine wheel (2).

**6.** A hydrodynamic coupling (13) according to claim 5, **characterized in that** the bolt (5.1) slides in a guide means (5.4) which is fastened to the outside shell (1.1) or is arranged in an integral manner with the same, and that the opening (5.2) is arranged in a projection (5.5) on the turbine wheel (2), especially in alignment with the guide means (5.4).

**7.** A hydrodynamic coupling (13) according to claim 6, **characterized in that** the bolt (5.1) is provided on its radially inner end with a head section (5.1.1) which comprises an enlarged outside diameter opposite of a shaft (5.1.2) of the bolt (5.1) which is radially adjacent to the outside so that a shoulder (5.1.3) is formed, and that a pressure spring (5.3) which is provided as a pressure means rests against said shoulder (5.1.3) and, radially opposite, against the guide means (5.4).

**8.** A hydrodynamic coupling (13) according to one of the claims 3 and 7, **characterized in that** the pressure spring (5.3) has such a spring force ($F_R$) and the bolt (5.1) has such a mass (m) that the mechanical locking device (5) closes above the predetermined speed irrespective of the degree of filling of the working chamber.

**9.** A hydrodynamic coupling according to one of the claims 1 or 2,
**characterized by** the following features:

> 9.1 the mechanical locking device (5) comprises a rocking lever (5.11) which can be swiveled in the radial direction of the coupling and an opening (5.12) which can be engaged by the rocking lever (5.11);
> 9.2 the rocking lever (5.11) is connected in a stationary manner to one of the two wheels (1, 2), especially the pump wheel (1), and the opening (5.12) is arranged in the other wheel (1, 2), especially the turbine wheel (2);
> 9.3 the rocking lever (5.11) is immersed into the working medium (3) at and above the predetermined degree of filling that it is pressed out of the opening (5.12) at least under cooperation of the lifting power ($F_A$) of the working medium;
> 9.4 a pressure means, especially a pressure spring (5.13), is provided which counteracts the lifting power ($F_A$) of the working medium on the rocking lever (5.11), so that the rocking lever (5.11) engages in the opening (5.12) beneath the predetermined degree of filling.

**10.** A hydrodynamic coupling (13) according to one of the claims 1 to 9, **characterized in that** the mechanical locking device (5) is provided with a means which after locking keeps the locking device (5) closed until manual actuation.

**11.** A turbocompound system with an exhaust-driven turbine (10) which is arranged in the exhaust stream (9) of a combustion engine (11), with

> 11.1 the combustion engine (11) driving a crankshaft (12), and
> 11.2 the exhaust-driven turbine (10) being switchable or switched into a drive connection with the crankshaft (12);
> **characterized in that**
> 11.3 a hydrodynamic coupling (13) in accordance with one of the claims 1 to 9 is arranged in the drive connection, whose pump wheel (1) stands in a drive connection with the exhaust-driven turbine (10) and whose turbine wheel (2) stands in a drive connection with the crankshaft (12).

**Revendications**

1. Accouplement hydrodynamique (13) en particulier pour un système turbocompound comportant :

   1.1. un impulseur (1)
   1.2. une turbine réceptrice (2), ladite turbine constituant avec l'impulseur (1) une chambre de travail (4) pouvant être remplie d'un fluide (3) ;
   1.3. un dispositif de verrouillage mécanique (5) solidarisant en rotation l'impulseur (1) et la turbine réceptrice (2), **caractérisé en ce**ci que ledit dispositif de verrouillage mécanique est en liaison avec une zone dudit accouplement (13) conduisant du fluide de telle sorte qu'il verrouille en dessous d'un degré de remplissage spécifié de la chambre de travail (4).

2. Accouplement hydrodynamique (13) selon la revendication 1, **caractérisé en ce**ci que ledit dispositif de verrouillage mécanique (5) est constitué de telle manière que, de plus, il verrouille au-dessus d'une vitesse de rotation spécifiée de l'impulseur (1) ou de la turbine réceptrice (2).

3. Accouplement hydrodynamique (13) selon la revendication 1 ou 2, **caractérisé en ce**ci que :

   3.1 ledit dispositif de verrouillage mécanique (5) présente en direction radiale de l'accouplement un doigt (5.1) coulissant et une ouverture (5.2) dans laquelle ledit doigt (5.1) peut s'engrener ;
   3.2 ledit doigt (5.1) est fixé solidairement en rotation avec l'un des deux volants (1, 2), en particulier avec ledit impulseur (1), et l'ouverture (5.2) est disposée sur l'autre volant (1, 2), en particulier sur ladite turbine réceptrice (2) ;
   3.3 ledit doigt (5.1) est immergé dans ledit fluide (3), lorsque le degré de remplissage spécifié est atteint ou dépassé, de manière à ce qu'au moins avec le concours de la poussée verticale ($F_A$) dudit fluide (3) il soit poussé hors de l'ouverture (5.2) ;
   3.4 un moyen de pression, en particulier un ressort de compression (5.3) est prévu agissant contre la poussée verticale ($F_A$) dudit fluide (3) sur ledit doigt (5.1), si bien qu'en dessous du degré de remplissage spécifié, ledit doigt (5.1) s'engrène dans ladite ouverture (5.2).

4. Accouplement hydrodynamique (13) selon la revendication 3, **caractérisé en ce**ci que ledit doigt (5.1) présente une forme cylindrique et que son axe longitudinal est perpendiculaire à l'axe de rotation (6) dudit accouplement (13).

5. Accouplement hydrodynamique (13) selon une des revendications 3 ou 4, **caractérisé en ce**ci que ledit impulseur (1) présente une coque externe (1.1), qui enserre ladite turbine réceptrice (2) sur sa face opposée à ladite chambre de travail (4) et en ceci que ledit dispositif de verrouillage mécanique (5) est disposé dans l'espace entre ladite coque externe (1.1) et ladite turbine réceptrice (2).

6. Accouplement hydrodynamique (13) selon la revendication 5, **caractérisé en ce**ci que ledit doigt (5.1) glisse dans un guidage (5.4) fixé à ladite coque externe (1.1) ou constitue intégralement une seule pièce avec elle et en ceci que ladite ouverture (5.2) est constituée dans une saillie (5.5) à ladite turbine réceptrice (2), en particulier constitué dans l'alignement avec ledit guidage (5.4).

7. Accouplement hydrodynamique (13) selon la revendication 6, **caractérisé en ce**ci que ledit doigt (5.1) est muni à son extrémité interne radiale d'une tête (5.1.1) présentant un diamètre extérieur agrandi par rapport à une tige (5.1.2) dudit doigt (5.1) suivant directement radialement vers l'extérieur, de manière à ce qu'un épaulement (5.1.3) soit constitué, et en ceci qu'un ressort de compression (5.3), qui est prévu comme moyen de pression, s'appuie contre ledit épaulement (5.1.3) et radialement en direction opposée dudit guidage (5.4).

8. Accouplement hydrodynamique (13) selon une des revendications 3 et 7, **caractérisé en ce**ci que ledit ressort de compression (5.3) présente une force de ressort ($F_R$) et ledit doigt (5.1) une masse (m) telles que ledit dispositif de verrouillage mécanique (5) verrouille au-dessus de la vitesse de rotation spécifiée indépendamment du niveau de remplissage de ladite chambre de travail (4).

9. Accouplement hydrodynamique (13) selon une des revendications 1 ou 2, **caractérisé en ce**ci que :

   9.1 ledit dispositif de verrouillage mécanique (5) présente un culbuteur (5.11) pivotant en direction radiale de l'accouplement et une ouverture (5.12) dans laquelle ledit culbuteur (5.11) peut s'engrener ;
   9.2 ledit culbuteur (5.11) est fixé immobile à l'un des deux volants (1, 2), en particulier audit impulseur (1), et que ladite ouverture (5.12) est disposée sur l'autre volant (1, 2), en particulier sur ladite turbine réceptrice (2) ;
   9.3 ledit culbuteur (5.11) est immergé dans ledit fluide (3), lorsque le degré de remplissage spécifié est atteint ou dépassé, de manière à ce qu'au moins avec le concours de la poussée verticale ($F_A$) dudit fluide (3) il soit poussé hors de ladite ouverture (5.12) ;

9.4 un moyen de pression, en particulier un ressort de compression (5.13), est prévu agissant contre la poussée verticale ($F_A$) dudit fluide (3) sur ledit culbuteur (5.11), si bien qu'en dessous du degré de remplissage spécifié, ledit culbuteur (5.11) s'engrène dans ladite ouverture (5.12).

10. Accouplement hydrodynamique (13) selon, une des revendications 1 à 9, **caractérisé en ce**ci que ledit dispositif de verrouillage mécanique (5) soit muni d'un moyen par lequel ledit dispositif de verrouillage mécanique (5), après son verrouillage, soit maintenu verrouillé jusqu'à ce qu'on l'actionne manuellement.

11. Système turbocompound comportant une turbine de récupération sur gaz d'échappement (10), qui est disposée dans le flux des gaz d'échappement (9) d'un moteur à combustion (11),

11.1 ledit moteur à combustion (11) entraînant un vilebrequin (12), et

11.2 ladite turbine de récupération sur gaz d'échappement (10) pouvant être embrayée ou étant embrayée en liaison d'entraînement avec ledit vilebrequin (12),

**caractérisé en ce**ci que

11.3 dans la liaison d'entraînement, un accouplement hydrodynamique (13) selon une des revendications 1 à 9 est disposé dont l'impulseur (1) est en liaison d'entraînement avec ladite turbine de récupération des d'échappement (10) et dont la turbine réceptrice (2) est en liaison d'entraînement avec ledit vilebrequin (12).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0055527 A
- GB 2292774 A
- US 2397862 A